# EUROPÄISCHE PATENTSCHRIFT

(11) **EP 1 465 946 B1**
(45) Veröffentlichungstag und Bekanntmachung des Hinweises auf die Patenterteilung: **01.08.2007**
(21) Anmeldenummer: 03704350.2
(22) Anmeldetag: 03.01.2003
(51) Int. Cl.: C08K 9/00, C08L 83/06, C09D 4/06, G02B 5/32, G03H 1/04

(54) **NANOKOMPOSITMATERIAL ZUR HERSTELLUNG VON BRECHZAHLGRADIENTENFOLIEN**
NANOCOMPOSITE MATERIAL FOR THE PRODUCTION OF INDEX OF REFRACTION GRADIENT FILMS
MATIERE NANOCOMPOSITE POUR LA FABRICATION DE FEUILLES A GRADIENT D'INDICE DE REFRACTION

(30) Priorität: 10.01.2002 DE 10200760
(43) Veröffentlichungstag der Anmeldung: 13.10.2004
(73) Patentinhaber: Tomoegawa Co., Ltd., Tokyo 104-8335 (JP)
(72) Erfinder: HARADA, Takamasa, Chiba 270-13 (JP); KITA, Fumio, 65187 Wiesbaden (DE); ZIMMERMANN, Andreas, 64347 Griesheim (DE); DELLWO, Ulrike, 54413 Gusenburg (DE); MENNIG, Martin, 66287 Quierschied (DE); OLIVEIRA, Peter, W., 66111 Saarbrücken (DE); SCHMIDT, Helmut, 66130 Saarbrücken-Güdingen (DE); SCHNEIDER, Heike, 66127 Saarbrücken (DE)
(74) Vertreter: Isenbruck, Günter
(86) Internationale Anmeldenummer: PCT/EP2003/000020
(87) Internationale Veröffentlichungsnummer: WO 2003/057773

(56) Entgegenhaltungen:
- WO-A-95/13326
- DE-A- 19 511 627

## Beschreibung

Die vorliegende Erfindung betrifft ein Nanokompositmaterial zur Herstellung eines Brechzahlgradientenmaterials mit Stoffgradienten, der durch nanoskalige Teilchen hervorgerufen wird, sowie die Verwendung derartiger Brechzahlgradientenmaterialien zur Herstellung von Folien mit Brechzahlgradienten, insbesondere für holographische und Maskenbelichtungsanwendungen sowie für Gradientenindexlinsen in der abbildenden Optik.

Es ist bekannt, dass die Diffusion von Monomeren mit gegenüber der umgebenden flüssigen Matrix erhöhtem oder auch erniedrigtem Brechungsindex für die Erzeugung eines Brechzahlgradienten genutzt werden kann (US 5,552,261, US 5,529,473). Der bei Photopolymeren bekannte "Colburn-Haines-Effekt" zur gerichteten Diffusion mit anschließender Polymerisierung in den erwärmten bzw. belichteten Bereichen führt zu einer Erhöhung der Dichte und somit zu einer Erhöhung oder Erniedrigung des Brechwertes. Bei organischen Monomeren ist diese Änderung jedoch gering, da die sich einstellende Dichte-Änderung nur einen geringen Beitrag zur Molrefraktion liefert. Danach wird das Brechzahlgradientenprofil durch Nachvernetzung, beispielsweise über PhotoPolymerisation, fixiert. Nachteile dieser Werkstoffe sind relativ niedrige Brechzahlhübe, lange Prozesszeiten und hohe Streuverluste.
Aus der WO 97/38333 ist bekannt, dass man Brechzahlgradienten auch über die Migration von Nanopartikeln mit hoher oder niedriger Brechzahl in einer flüssigen (Sol), photopolymerisierbaren Matrix erzeugen und über eine nachträgliche Vernetzung (Polymerisation, Kondensation) fixieren kann. Der wesentliche Nachteil dieses Verfahrens besteht darin, dass man an eine flüssige Matrixphase gebunden ist, woraus sich Handlingprobleme bei der Anwendung von Holographie- bzw. Maskenbelichtungstechnik ergeben.
Der vorliegenden Erfindung lag daher die Aufgabe zugrunde, ein Material zu entwickeln, das in der Lage ist, einen ausreichend hohen Brechzahlgradienten durch Anlegen einer elektrischen Potentialdifferenz, Elektronenbestrahlung, Holographie, Lithographie oder durch Belichtung aufzubauen, und die vorstehend genannten Nachteile überwindet.

Es wurde gefunden, dass diese Aufgabe überraschenderweise durch eine feste oder gelartige Matrix, wie nachstehend definiert, gelöst werden kann.

Gegenstand der Erfindung ist ein polymerisierbares Nanokompositmaterial, enthaltend
a) 4,9 bis 95,9 Gew.-%, vorzugsweise 10 bis 80 Gew.-%, insbesondere 20 bis 40 Gew.-%, eines löslichen Polymers;
b) 4 bis 95 Gew.-%, vorzugsweise 10 bis 80 Gew.-%, insbesondere 20 bis 60 Gew.-%, mindestens eines partiell oder vollständig kondensierten Silans aus der Gruppe der Acrylsilane, Epoxysilane, Acrylalkoxysilane, Acrylepoxysilane, Epoxyalkoxysilane, Alkoxysilane und Alkylalkoxysilane, wobei das Silan einen anorganischen Kondensationsgrad von 33 bis 100 % und einen organischen Konversionsgrad von 0 bis 95 %, bevorzugt 5 bis 60 %, aufweist;
c) 0 bis 60 Gew.-%, vorzugsweise 0,1 bis 40 Gew.-%, beispielsweise 0,1 bis 4,9 Gew.-%, insbesondere 0,5 bis 4 Gew.-%, eines Acrylats;
d) 0,1 bis 50 Gew.-%, vorzugsweise 1 bis 40 Gew.-%, insbesondere 5 bis 30 Gew.-%, oberflächenmodifizierter nanoskaliger Teilchen aus der Gruppe der Oxide, Halogenide, Silikate, Titanate, Zirkonate, Aluminate, Stannate, Plumbate sowie Mischoxide davon;
e) 0 bis 50 Gew.-%, vorzugsweise 0,1 bis 30 Gew.-%, insbesondere 1 bis 20 Gew.-% eines Weichmachers;
f) 0 bis 5 Gew.-%, vorzugsweise 0,01 bis 1 Gew.-%, eines thermischen oder photochemischen Vernetzungsinitiators, Sensitizers, Netzhilfsmittels, Adhäsionshilfsmittels, Antioxidants, Verlaufsmittels, Stabilisators, Farbstoffs, photochromen und thermochromen Stoffs, oder eine Kombination davon, jeweils bezogen auf das Gesamtgewicht (Trockengewicht) des Nanokompositmaterials.

Die dynamische Viskosität des erfindungsgemäßen Nanokompositmaterials beträgt (bei 25°C) 2 bis 1000 Pas, vorzugsweise 5 bis 500 Pas, insbesondere 10 bis 100 Pas, gemessen mit einem Rotationsviskosimeter.

Das lösliche Polymer a) ist ein in einem organischen Lösungsmittel lösliches Polyacrylat, Polymethacrylat, Polyepoxid, Polyvinylalkohol, Polyvinylacetat oder Polyvinylbutyral. Als organische Lösungsmittel kommen vorzugsweise Alkohole wie Ethanol, Isopropanol oder Butanol, Ketone wie Aceton, Ester wie Ethylacetat, Ether wie Tetrahydrofuran und aliphatische, aromatische und halogenierte Kohlenwasserstoffe wie Hexan, Benzol, Toluol und Chloroform in Betracht.

Als Silane b) kommen solche mit ein, zwei, drei oder vier, vorzugsweise zwei oder drei, hydrolysierbaren Gruppen sowie Mischungen davon in Betracht. Hydrolysierbare Gruppen sind beispielsweise Wasserstoff oder Halogen, wie F, Cl, Br oder I; Alkoxy, vorzugsweise C₁₋₆-Alkoxy, wie z.B. Methoxy, Ethoxy, n-Propoxy, i-Propoxy und Butoxy; Aryloxy, vorzugsweise C₆₋₁₀-Aryloxy, wie z.B. Phenoxy; Acyloxy, wie z.B. Acetoxy oder Propionyloxy; Alkylcarbonyl, vorzugsweise C₂₋₇-Alkylcarbonyl, wie z.B. Acetyl; Amino, Monoalkylamino oder Dialkylamino mit vorzugsweise 1 bis 12, insbesondere 1 bis 6 Kohlenstoffatomen in der bzw. den Alkylgruppe(n).
Besonders bevorzugte Silane sind z.B. Methacryloxypropyltrimethoxysilan, Acryloxypropyltrimethoxysilan, Dimethyldimethoxysilan, Dimethyldiethoxysilan, 3-Glycidyloxy-propyltrimethoxysilan, Glycidyloxy-propyltriethoxysilan, Vinyltriethoxysilan, Methyltriethoxysilan.

Die partielle Kondensation der Silane kann mit einer unterstöchiometrischen Menge, z.B einer 0,3 bis 0,9-fachen stöchiometrischen Menge, des Hydrolysemittels, wie z.B. Wasser, wässrige HCl, wässrige HN0₃ oder wässriges Ammoniak, durchgeführt werden. Die Menge an Hydrolysemittel wird dabei so bemessen, dass ein anorganischer Kondensationsgrad von 33 bis 100 % erzielt wird. Ein anorganischer Kondensationsgrad von 33 % bedeutet beispielsweise, dass im Durchschnitt einer von drei hydrolysierbaren Resten des Silans unter Bildung einer -Si-O-Si- Brücke kondensiert ist. Bei einem Kondensationsgrad von 100 % sind sämtliche hydrolysierbaren Reste des betreffenden Silanmoleküls kondensiert.

Der organische Konversionsgrad gibt das Ausmaß der Polyadditionsreaktion der in den Silanseitenketten vorhandenen C=C-Doppelbindungen oder Epoxygruppen an. Ein organischer Konversionsgrad von 95 % bedeutet beispielsweise, dass . 95 % aller C=C-Doppelbindungen oder Epoxygruppen umgesetzt sind. Im Falle der C=C-Doppelbindungen, z.B. in Acrylatresten, kann der organische Konversionsgrad durch die Abnahme der C=C-Schwingungsbande im IR-Spektrum gemessen werden. Die Polyaddition kann durch übliche Methoden, wie saure oder basische Hydrolyse im Falle von Epoxygruppen oder durch UV-Bestrahlung im Falle von C=C-Doppelbindungen, herbeigeführt werden.

Das Acrylat c) ist vorzugsweise Methylmethacrylat oder ein Dioldiacrylat oder Dioldimethacrylat, wie z.B. Hexandioldimethacrylat, Hexandioldiacrylat, Dodecandioldiacrylat oder Dodecandioldimethacrylat.

Die oberflächenmodifizierten Nanopartikel d) umfassen vorzugsweise die Oxide ZnO, CdO, SiO₂, TiO₂, ZrO₂, CeO₂, SnO₂, Al₂O₃, In₂O₃, La₂O₃, Fe₂O₃, Ta₂O₅, Cu₂O, V₂O₅, MoO₃ und WO₃ sowie die Halogenide AgCl, AgBr, Agl, Cul, CuBr, Cdl₂ und Pbl₂.
Bei den Oberflächengruppen kann es sich um organische polymerisierbare und/oder polykondensierbare Gruppen handeln, die einer radikalischen, kationischen oder anionischen, thermischen oder photochemischen Polymerisation oder einer thermischen oder photochemischen Polykondensation zugänglich sind. Erfindungsgemäß bevorzugt werden Oberflächengruppen, die über eine (Meth)acryl-, Allyl-, Vinyl-, oder Epoxygruppe verfügen, wobei (Meth)acryl- und Epoxygruppen besonders bevorzugt werden. Bei den polykondensationsfähigen Gruppen sind vor allem Hydroxy-, Carboxy-, und Aminogruppen zu nennen, mit deren Hilfe Ether-, Ester- und Amidbindungen zwischen den nanoskaligen Teilchen und mit dem Silan erhalten werden können.

Die an den Oberflächen der nanoskaligen Teilchen vorhandenen organischen Gruppierungen, die die polymerisierbaren und/oder polykondensierbaren Gruppen umfassen, haben bevorzugt ein Molekulargewicht von unter 300, insbesondere unter 200.

Zur Herstellung der oberflächenmodifizierten Nanopartikel kommen alle gebräuchlichen Herstellungsverfahren in Betracht, wie z.B in der DE-A-197 19 948 beschrieben.
Die Nanopartikel weisen vorzugsweise einen Durchmesser von nicht mehr als 100 nm, insbesondere nicht mehr als 50 nm auf. Hinsichtlich der Untergrenze gibt es keine besondere Beschränkung, wenngleich diese Untergrenze aus praktischen Gründen in der Regel bei 0,5 nm, insbesondere 1 nm und häufig 4 nm liegt.

Als Weichmacher e) kommen prinzipiell alle Verbindungen in Betracht, die gemäß DIN 55945 (Dezember 1988) elastifizierende oder weichmachende Eigenschaften haben, überwiegend solche esterartiger Natur. Bevorzugt sind Weichmacher aus der Gruppe der acyclischen aliphatischen Dicarbonsäureester, z.B. Ester der Adipinsäure wie Di-n-octyladipat, Bis-(2-ethylhexyl)adipat, Diisodecyladipat, Dibutylsebacat, Dioctylsebacat und Bis-(2-ethylhexyl)sebacat; Ester aus C₆-C₁₂-Dicarbonsäuren mit Polyalkylenglykolen, z.B. Triethylenglykol-bis-(n-heptanoat), Triethylenglykol-bis-(2-ethylhexanoat), Triethylenglykol-bis-(isononanoat); Ester aus C₆-C₁₂-Carbonsäuren mit Polyalkylenglykolen, z.B. Triethylenglykol-bis-(2-ethyl-butyrat); Diester aus (Meth)acrylsäure und Polyalkylenglykolen, wie Polypropylenglykoldiacrylat oder -dimethacrylat, Polyethylenglykoldiacrylat oder -dimethacrylat, beispielsweise Tetraethylenglykoldi(meth)acrylat.

Das Nanokompositmaterial enthält zweckmäßigerweise einen Polymerisations-, Polyadditions- und/oder Polykondensationskatalysator f), der die Vernetzung und Härtung thermisch und/oder photochemisch induzieren kann (kollektiv als "Vernetzungsinitiator" bezeichnet).
Als Photoinitiatoren können z.B. die im Handel erhältlichen Starter eingesetzt werden. Beispiele hierfür sind Irgacure^{®} 184 (1-Hydroxycyclohexylphenylketon), Irgacure^{®} 500 (1-Hydroxycyclohexylphenylketon, Benzophenon) und andere Photoinitiatoren vom Irgacure^{®}-Typ; Darocur^{®} 1173, 1116, 1398, 1174 und 1020, 2-Chlorthioxanthon, 2-Methylthioxanthon, 2-lsopropylthioxanthon, Benzoin, 4,4'-Dimethoxy-benzoin, Benzoinethylether, Benzoinisopropylether, Benzyldimethylketal, 1,1,1-Trichloracetophenon, Diethoxyacetophenon und Dibenzosuberon.
Als thermische Initiatoren kommen vorzugsweise organische Peroxide in Form von Diacylperoxiden, Peroxydicarbonaten, Alkylperestem, Dialkylperoxiden, Perketalen, Ketonperoxiden und Alkylhydroperoxiden in Frage. Beispiele für derartige thermische Initiatoren sind Dibenzoylperoxid, tert.-Butylperbenzoat und Azobisisobutyronitril. Ein Beispiel für einen kationischen Thermostarter ist 1-Methylimidazol.
Beispiele für Verlaufsmittel sind Polyether-modifizierte Dimethylpolysiloxane, wie z.B. ^{®}Byk 306. Beispiele für Sensitizer sind aminmodifizierte Oligoetheracrylate, wie z.B. ^{®}Crodamere.

Gegenstand der vorliegenden Erfindung ist auch ein Verfahren zur Herstellung des beschriebenen Nanokompositmaterials, dadurch gekennzeichnet, dass man das Silan b) durch Zusatz eines Hydrolysemittels partiell oder vollständig kondensiert und ggf. durch UV-Bestrahlung polymerisiert, und mit einer oder mehreren der Komponenten a), c) bis f) vermischt, oder das Silan b) zuerst mit einer oder mehreren der Komponenten a), c) bis f) vermischt und dann kondensiert und ggf. polymerisiert, und anschließend ggf. organisches Lösungsmittel entfernt. Die Kondensation mit dem Hydrolysemittel erfolgt bevorzugt bei Temperaturen zwischen 5 und 40°C.

Die Nanopartikel, die für die Änderung der Brechzahl benötigt werden, können auf unterschiedlichen Wegen in das System eingebracht werden:
Zum einen können kommerziell erhältliche Nanopartikel als Suspension in Lösemitteln (kompatibel zum Lösemittel des Polymers) verwendet werden. Durch Reaktion mit polymerisierbaren Gruppen enthaltenden Verbindungen, z.B. mit ungesättigten Carbonsäuren, insbesondere Methacrylsäure, Acrylsäure, Acrylsilane und/oder ungesättigten β-Diketonen, wird zunächst die Nanopartikel-Oberfläche modifiziert. Dann wird diese Suspension mit der Silan-Polymerlösung gemischt.
Zum anderen können die Nanopartikel auch in situ durch Hydrolyse und Kondensation von entsprechenden Precursoren (vorzugsweise Alkoholate) in der teil- und vorkondensierten Organosilankomponente der Matrix oder im Gemisch aus vorkondensiertem Organosilan und gelöstem Polymer hergestellt werden.

Gegenstand der Erfindung ist weiterhin die Verwendung des beschriebenen Nanokompositmaterials zur Herstellung eines planaren Materials, insbesondere Folien, mit Brechzahlgradienten.

Zur Herstellung eines Materials mit Brechzahlgradient wird das erfindungsgemäße photopolymerisierbare Nanokompositmaterial auf ein geeignetes Substrat wie z.B. Glas, Keramik, Silizium, Metall, Halbleitermaterialien oder (vorzugsweise transparente) Kunststofffolien, insbesondere PET, PE, PP, aufgetragen.
Die Beschichtung des photopolymerisierbaren Nanokompositmaterials kann nach üblichen Methoden erfolgen, z.B. durch Tauchen, Fluten, Rakeln, Gießen, Schleudern, Spritzen, Aufstreichen, Slot-Coating, Meniskus-Coating, Foliengießen, Spinnen oder Sprühen. Die jeweils erforderliche Viskosität kann durch Zugabe oder Entfernung des verwendeten Lösungsmittels eingestellt werden. Bevorzugte Schichtdicken (im gehärteten Zustand) liegen zwischen 0,2 bis 100 µm.

Gegenstand der Erfindung ist weiterhin eine Brechzahlgradientenfolie, bestehend im wesentlichen aus einer oder zwei transparenten Kunststofffolien, die mit einem erfindungsgemäßen Nanokompositmaterial beschichtet sind, in welchem durch Anlegen einer elektrischen Potentialdifferenz, Elektronenbestrahlung, Holographie, Lithographie oder durch lokale Belichtung ein Brechzahlgradient erzeugt wurde.

Gegenstand der Erfindung ist weiterhin ein Verfahren zur Herstellung einer Brechzahlgradientenfolie, dadurch gekennzeichnet, dass man ein erfindungsgemäßes Nanokompositmaterial auf eine transparente Kunststofffolie aufträgt, eventuell vorhandenes organisches Lösungsmittel verdampfen lässt, zweckmäßigerweise auf einen Restanteil von 0 bis 15 Gew.-%, insbesondere 2 bis 12 Gew.-%, bezogen auf das Gesamtgewicht der Brechzahlgradientenfolie, und gegebenenfalls zum Schutz eine transparente Abdeckfolie auf die Nanokompositschicht auflaminiert. In dieser Form kann das Folienmaterial aufgewickelt und lichtgeschützt und klimatisiert (15 - 30°C) zwischengelagert werden. Durch Anlegen einer elektrischen Potentialdifferenz, Elektronenbestrahlung, Holographie, Lithographie oder durch lokale Belichtung wird ein Brechzahlgradient in der Nanokompositschicht erzeugt und durch vollständige thermische und/oder lichtinduzierte Vernetzung des Nanokompositmaterials fixiert.
Bevorzugt ist die Bestrahlung mit UV-Licht.

Durch die relativ intensive lokale Belichtung vernetzen die Nanopartikel mit der teilkondensierten Silankomponente der gelierten Matrix untereinander und/oder miteinander, so dass ein chemischer Potentialgradient für Nanopartikel mit C=C an ihrer Oberfläche zur unbelichteten Nachbarregion gebildet wird. Aus dieser Nachbarregion diffundieren weitere Nanopartikel in die belichtete Region. Dieser Prozess kann während und nach der Belichtung erfolgen und dauert zwischen wenigen Sekunden bis wenige Minuten, je nach Belichtungsbedingungen und Temperatur. Durch den Brechzahlunterschied zwischen den Nanopartikeln und der Matrix entsteht auf diese Weise ein lokaler Brechzahlgradient. Im Anschluss an diesen Prozess erfolgt die vollständige Vernetzung der Matrix durch PhotoPolymerisation und/oder thermisch initiierte Polymerisation (Der Ausdruck "Polymerisation", wie er hierin verwendet wird, soll nicht nur die Polymerisation im eigentlichen Sinne, sondern auch Polyadditions- und Polykondensationsreaktionen einschließen). Dabei wird eventuell vorhandenes Restlösungsmittel entfernt.

Überraschenderweise erfolgt die Partikelmigration in der erfindungsgemäßen Matrix, obwohl diese fest oder gelartig ist.

Das erfindungsgemäße Brechzahlgradientenmaterial kann beispielsweise zur Herstellung von passiven Lichtleiter-Elementen für Displays und Beleuchtungselemente, für Sicherheitshologramme, Bildhologramme, digitale Hologramme zur Informationsspeicherung, für Systeme mit Komponenten, die Lichtwellenfronten verarbeiten, für Anwendungen als planare Wellenleiter, für Anwendungen zur Polarisationsbeeinflussung von Licht, für Anwendungen als Strahlteiler und als Linse verwendet werden.

In den nachfolgenden Beispielen wird als Maß für die erreichte Brechwertmodulation der "angle of view" gemessen. Hierbei wird die Lumineszenz eines auf einen Substrat aufgetragenes Nanokompositmaterials nach der Partikelmigration und vollständigen Aushärtung der Matrix (Einfrieren des Brechzahlgradienten) 1 °-Schritten bis 60° (α) mit einem Lumineszenzmeter vermessen (60° zur Zentralachse). der "angle of view" entspricht der Halbwertsbreite 1/2 einer Auftragung Intensität 1 [%] gegen den Winkel α (-30 bis +30°C). Je höher der "angle of view", desto höher die Streukraft des Materials. Angestrebt werden Werte über 10°.

### Beispiel 1: Herstellung eines Photo-Nanokomposits für Holographie

### a) Herstellung von Zr(OPr)₄/MAS (1:1):

In einem 250 ml Dreihalskolben werden 65,4 g (0,20 mol) Zr(OPr)₄ vorgelegt und im Eisbad gekühlt. Dazu tropft man langsam (15 min) unter Rühren 17,2 g (0,20 mol) Methacrylsäure (MAS) hinzu. Nach vollständiger Zugabe wird das Reaktionsgemisch nach 10 min aus dem Eisbad entfernt und anschließend bei 25°C gerührt.

### b) Herstellung einer Silan-PVB-Mischung:

Zu 49,6 g (0,20 mol) Methacryloxypropyltrimethoxysilan (MPTS) gibt man 24 g (0,20 mol) Dimethyldimethoxysilan (DMDS) hinzu und lässt 5 min bei 25°C rühren. Nach Zugabe von 9,05 g 0,1 N HCl lässt man weitere 10 min bei 25°C rühren, bis das Reaktionsgemisch aufklart. Anschließend werden 49,92 g Polyvinylbutyral (30 gew.-%ig in 2-PrOH) hinzu gegeben und 5 min bei 25°C rühren gelassen.

### c) Herstellung der Matrix

Man fügt 22,27 g der in a) hergestellten Zr(OPr)₄/MAS-Nanopartikel unter Rühren langsam zur Mischung b) hinzu. Nach vollständiger Zugabe lässt man 4 Stunden bei 25°C rühren und tropft 1,08 g (0,06 mol) Wasser zu. Nach Rühren über Nacht bei 25°C werden 6,2 g Dodecandioldimethacrylat (DDDMA) und 1,6 g des Photostarters ^{®}Irgacure 184 zugegeben.

### Beispiele 2 bis 4:

Die Darstellung von Zr(OPr)₄/MAS im Verhältnis 1:1 erfolgt wie in Beispiel 1.

In einem zweiten Gefäß wird MPTS vorgelegt, dazu werden die gewünschten Mengen an DMDES, PVB-Lösung (30 gew.-%ig in Ethanol) und TEG-di(2-ethylhexanoat) gemäß Tabelle 1 gegeben und 15 min bei 25°C rühren gelassen. Dann gibt man 0,1 N HCl hinzu und lässt etwa 10 min bei RT rühren, bis das anfangs trübe Reaktionsgemisch aufklart. Danach fügt man Zr(OPr)₄/MAS unter Rühren langsam mit Hilfe eines Tropftrichters hinzu. Nach vollständiger Zugabe wird 4 h bei RT gerührt. Anschließend wird die benötigte Menge Wasser zugetropft und über Nacht bei RT gerührt.
Danach fügt man ^{®}Crodamer UVA 421 zu. Nach weiteren 15 min erfolgt die Zugabe von ^{®}Irgacure 819. Anschließend wird der Ansatz mit Isopropanol verdünnt und ^{®}Byk 306 zugegeben. Man lässt bis zur vollständigen Durchmischung rühren.

**Tabelle 1**

| | Beispiel 2 | | Beispiel 3 | | Beispiel 4 | |
|---|---|---|---|---|---|---|
| MPTS | 18,6 g | 0,075 mol | 24,8 g | 0,1 mol | 31,0 g | 0,125 mol |
| PVB-Lösung | 133,6 g | | 133,6 g | | 133,6 g | |
| TEG-di(2-ethylhexanoat) | 105,1g | | 110,6 g | | 116,1 g | |
| DMDES | 11,1 g | 0,075 mol | 14,8 g | 0,1 mol | 18,5 g | 0,125 mol |
| 0,1 N HCl | 3,375 g | 0,1875 mol | 4,50 g | 0,25 mol | 5,6 g | 0,3125 mol |
| Zr(OⁿPr)₄(MAS) | 41,6 g | | 41,6 g | | 41,6 g | |
| H₂O | 1,9 g | 0,11 mol | 1,9 g | 0,11 mol | 1,9 g | 0,11 mol |
| Crodamer UVA 421 | 6,41 g | | 6,75 g | | 7,08 g | |
| Irgacure 819 | 6,41 g | | 6,75 g | | 7,08 g | |
| Byk 306 | 6,15 g | | 6,5 g | | 6,8 g | |
| Isopropanol | 82,0 g | | 86,3 g | | 90,6 g | |
| angle of view | 12° | | 12° | | 13° | |

| | | | | | | |
|---|---|---|---|---|---|---|
| TEG = Triethylenglykol DMDES = Dimethyldiethoxysilan | | | | | | |

### Beispiele 5 bis 14:

Die Herstellung von Zr(OPr)₄/MAS erfolgt wie in Beispiel 1 beschrieben:

In einem zweiten Gefäß wird MPTS vorgelegt, dazu werden die gewünschten Mengen an DMDES, PVB-Lösung (30 gew.-%ig in Ethanol) und Isopropanol gegeben und 15 min bei 25°C rühren gelassen. Dann gibt man die 0,1 N HCl hinzu und lässt etwa 10 min bei RT rühren, bis das anfangs trübe Reaktionsgemisch aufklart. Danach fügt man die gewünschte Menge Zr(OPr)₄/MAS unter Rühren langsam mit Hilfe eines Tropftrichters hinzu. Nach vollständiger Zugabe wird 4 h bei RT gerührt. Anschließend wird die benötigte Menge Wasser zugetropft und über Nacht bei RT gerührt.
Dann wird Irgacure 819 und Byk 306 zugegeben. Man lässt bis zur vollständigen Durchmischung rühren (Basis-Lack). Anschließend erfolgt die Zugabe der Weichmacher und Sensitizer gemäß Tabelle 2.

**Basis-Lack**

| MPTS | 139 g | 0,56 mol |
|---|---|---|
| PVB-Lösung | 601,2 g | |
| Isopropanol | 365,7 g | |
| DMDES | 82,9 g | 0,56 mol |
| 0,1 N HCl | 25,2 g | 1,41 mol |
| Zr(OⁿPr)₄/(MAS) | 187,2 g | |
| H₂O | 8,46 g | 0,47 mol |
| Irgacure 819 | 15,8 g | |
| Byk 306 | 23,7 g | |

| | | |
|---|---|---|
| PVB: ^{®}Mowital 30 HH und 60 HH (1:1) | | |

**Tabelle 2: Variation der Weichmacher und Sensitizer(Variation pro 10 g Ansatz):**

| Bsp. | Crodamer UVA 421 | Polyalkylenglykolacrylat | TEG-di(2-ethylhexanoat) | angle of view |
|---|---|---|---|---|
| 5 | 0,7776g | - | 3,1104 g | 16° |
| 6 | 1,1664 g | - | 3,1104 g | 16° |
| 7 | 1,5552 g | - | 1,5552 g | 12° |
| 8 | 0,7776 g | 2,3328 g PPGDMA (570) | - | 12° |
| 9 | 0,7776 g | 1,5552 g PEGDMA (330) | - | 13° |
| 10 | 0,7776 g | 1,5552 g PEGDMA (330) | 0,7776 g | 13° |
| 11 | 0,7776 g | 2,3328 g PPGDA (540) | - | 10° |
| 12 | 0,7776 g | 1,5552 g PEGDA (258) | 0,7776 g | 13° |
| 13 | - | 1,5552g PEGDMA (330) | 1,5552 g | 14° |
| 14 | - | 0,7776 g PEGDMA (330) | 2,3328g | 16° |

| | | | | |
|---|---|---|---|---|
| PPGDMA (570): Polypropylenglykoldimethacrylat (mittleres Molgewicht: 570 g/mol) PEGDMA (330): Polyethylenglykoldimethacrylat (mittleres Molgewicht: 330 g/mol) PPGDA (540): Polypropylenglykoldiacrylat (mittleres Molgewicht: 540 g/mol) PEGDA (258): Polyethylenglykoldiacrylat (mittleres Molgewicht: 258 g/mol) | | | | |

### Beispiel 15: Herstellung eines Photo-Nanokomposits für Lithographie

In einem 2 l Dreihalskolben werden 592,2 g (1,81 mol) Zr(OPr)4 vorgelegt und im Eisbad auf 10°C gekühlt. Dazu tropft man langsam unter Rühren 155,7 g (1,81 mol) MAS. Nach vollständiger Zugabe wird das Reaktionsgemisch nach 10 min aus dem Eisbad entfernt und anschließend bei 25°C gerührt.

In einem 10 I Reaktor werden 2312,1 g PVB (30 gew.-%ig in 2-Propanol) vorgelegt. Danach werden zuerst 2241,9 g (9,04 mol) MPTS und anschließend 1338 g (9,04 mol) Dimethyldiethoxysilan (DMDES) langsam hinzu gegeben und 45 min bei 25°C homogenisiert. Anschließend erfolgt die Zugabe von 407 g 0,1 N HCl. Die Temperatur im Reaktor wird mittels Thermostat auf 40°C konstant gehalten. Nach Aufklaren des Reaktionsgemisches erfolgt die Zugabe von 748 g des oben hergestellten Zr(OPr)₄/MAS tropfenweise unter kräftigem Rühren bei 40°C. Nach vollständiger Zugabe lässt man das Reaktionsgemisch 4 Stunden bei 25°C rühren. Danach werden 48,78 g (2,71 mol) Wasser zugegeben und weitere 16 h bei 25°C gerührt. Anschließend erfolgt die Zugabe von 260 g Hexandioldimethacrylat (HDDMA), 30 min Rühren bei 25°C und schließlich von 99 g ^{®}Crodamer UVA 421. Nach weiteren 30 min Rühren bei 25°C erfolgt die Zugabe von 99,5 g Irgacure 819.

### Holographische Experimente

Mittels Zwei-Wellenmischen werden phasenmodulierte Volumenhologramme sowohl als Transmissions- als auch als Reflexionshologramme erzeugt. Als kohärente Lichtquelle dient hier ein Argon-lonen-Laser. Der Laserstrahl (20 mW/cm²) wird auf einen Durchmesser von ca. 0,5 mm fokussiert und durch einen Strahlenteiler in zwei Teilstrahlen gleicher Intensität geteilt. Die Interferenz dieser beiden Strahlen führt zu einer räumlich periodischen Änderung der Lichtintensität. Als holographisches Material dient das aus Beispiel 1. Zur Schichtherstellung wird das Photo-Nanokomposit-Material auf ein Glassubstrat (10 cm x 10 cm x 0,25 cm) laminiert, mit einer Polyesterfolie abgedeckt und mit diesen Intensitätsmodulationen belichtet. Es baut sich eine Gitterstruktur auf, die die gleiche Periodizität besitzt wie die Intensitätsmodulation. Das Brechwertprofil wird eingefroren, indem einer der im Experiment verwendeten Schreibstrahlen abgeschirmt wird, um den verbleibenden Strahl zu einer Nachpolymerisation zu verwenden. Auf diese Weise werden Volumenhologramme mit einer Beugungseffizienz von 90 % (Wellenlänge: 633 nm) erzeugt.

### Lithographisches Experiment

Das in Beispiel 15 hergestellte Nanokomposit-Material wird durch einen Slot-Coating- Prozess auf Polyester (vorzugsweise PET) laminiert und bei 65°C im Ofen für 5 min ausgehärtet. Zum Schutz der Beschichtung wird eine Abziehfolie auflaminiert. So hergestellte Folien sind 200 m lang und 36 cm breit, die Trockenfilmdicke beträgt 20 bis 80 µm, vorzugsweise 40 bis 60 µm.
Zur Herstellung eines Diffusers wird die Schutzfolie entfernt und die photoempfindliche.Seite auf eine lithographische Maske aufgebracht. In einem kontinuierlichen Prozess (Geschwindigkeit des Bandes: 315 mm/min) wird die Photo-Nanokompositschicht durch Masken mit einer optischen Dichte von 0,8 bis 1,8, vorzugsweise von 1,0 bis 1,3 mit UV-Licht (Hg-Hochdrucklampe, Leistung: 1200 W) bestrahlt. Die Fixierung des Brechungsindex-Gradienten erfolgt durch thermische Behandlung im Ofen bei 100°C für 5 min.

## Patentansprüche

1. Polymerisierbares, festes oder gelartiges Nanokompositmaterial, enthaltend
a) 4,9 bis 95,9 Gew.-% eines in einem organischen Lösungsmittel löslichen Polyacrylats, Polymethacrylats, Polyepoxids, Polyvinylalkohols, Polyvinylacetats oder Polyvinylbutyrals,
b) 4 bis 95 Gew.-% eines partiell oder vollständig kondensierten Silans aus der Gruppe der Acrylsilane, Epoxysilane, Acrylalkoxysilane, Acrylepoxysilane, Epoxyalkoxysilane, Alkoxysilane und Alkylalkoxysilane, wobei das Silan einen anorganischen Kondensationsgrad von 33 bis 100 % und einen organischen Konversionsgrad von 0 bis 95 % aufweist;
c) 0 bis 60 Gew,-% eines Acrylats;
d) 0,1 bis 50 Gew,-% oberflächenmodifizierter nanoskaliger Teilchen aus der Gruppe der Oxide, Sulfide, Selenide, Telluride, Halogenide, Carbide, Arsenide, Antimonide, Nitride, Phosphide, Carbonate, Carboxylate, Phosphate, Sulfate, Silikate, Titanate, Zirkonate, Aluminate, Stannate, Plumbate sowie Mischoxide davon;
e) 0 bis 50 Gew.% eines Weichmachers;
f) 0 bis 5 Gew.-% eines thermischen oder photochemischen Vernetzungsinitiators, Sensitizers, Netzhilfsmittels, Adhäsionshilfsmittels, Verlaufsmittels, Antioxidants, Stabilisators, Farbstoffs, photochromen und thermochromen Stoffs, oder eine Kombination davon, jeweils bezogen auf das Gesamtgewicht (Trockengewicht) des Nanokompositmaterials.

2. Nanokompositmaterial nach Anspruch 1, **dadurch gekennzeichnet, dass** das Silan b) Methacryloxypropyltrimethoxysilan, Acryloxypropyltrimethoxysilan, Dimethyldimethoxysilan, Dimethyldiethoxysilan, 3-Glycidyloxy-propyltrimethoxysilan, Vinyltriethoxysilan, Methyltriethoxysilan oder eine Kombination davon ist.

3. Nanokompositmaterial nach einem der Ansprüche 1 oder 2, **dadurch gekennzeichnet, dass** das Acrylat c) Methylmethacrylat oder ein Dioldiacrylat oder Dioldimethacrylat ist. -

4. Nanokompositmaterial nach mindestens einem der Ansprüche 1 bis 3, **dadurch gekennzeichnet, dass** die nanoskaligen Teilchen d) mit Verbindungen, enthaltend (Meth)acryl-, Allyl-, Vinyl-, Epoxy-, Hydroxy-, Carboxy-, oder Aminogruppen oder eine Kombination davon, oberflächenmodifiziert sind.

5. Nanokompositmaterial nach mindestens einem der Ansprüche 1 bis 4, **dadurch gekennzeichnet, dass** die nanoskaligen Teilchen oberflächenmodifizierte SiO₂-. TiO₂-, ZrO₂- oder Ta₂O₅-Teilchen sind.

6. Nanokompositmaterial nach mindestens einem der Ansprüche 1 bis 5, enthaltend 0,1 bis 30 Gew.-% eines Weichmachers.

7. Verfahren zur Herstellung eines Nanokompositmaterials nach einem oder mehreren der Ansprüche 1 bis 6, **dadurch gekennzeichnet, dass** man das Silan b) durch Zusatz eines Hydrolysemittels partiell oder vollständig kondensiert und ggf. durch UV-Bestrahlung polymerisiert, und mit einer oder mehreren der Komponenten a), c) bis f) vermischt, oder das Silan b) zuerst mit einer oder mehreren der Komponenten a), c) bis f) vermischt und dann kondensiert und ggf. polymerisiert, und anschließend ggf. organisches Lösungsmittel entfernt.

8. Verwendung eines Nanokompositmaterials nach einem oder mehreren der Ansprüche 1 bis 6 zur Herstellung eines planaren Materials mit Brechzahlgradienten.

9. Brechzahlgradientenfolie, bestehend im wesentlichen aus einer oder zwei transparenten Kunststofffolien, die mit einem Nanokompositmaterial nach einem oder mehreren der Ansprüche 1 bis 6 beschichtet sind, in welchem durch Anlegen einer elektrischen Potentialdifferenz, Elektronenbestrahlung, Holographie, Lithographie oder durch lokale Belichtung ein Brechzahlgradient erzeugt wurde.

10. Verfahren zur Herstellung einer Brechzahlgradientenfolie nach Anspruch 9, **dadurch gekennzeichnet, dass** man ein Nanokompositmaterial nach einem oder mehreren der Ansprüche 1 bis 6 auf eine transparente Kunststofffolie aufträgt, organisches Lösungsmittel verdampfen lässt, gegebenenfalls eine transparente Abdeckfolie auf die Nanokompositschicht auflaminiert, durch Anlegen einer elektrischen Potentialdifferenz, Elektronenbestrahlung, Holographie, Lithographie oder durch lokale Belichtung einen Brechzahlgradienten in der Nanokompositschicht erzeugt, und anschließend den Brechzahlgradienten durch vollständige thermische und/oder lichtinduzierte Vernetzung des Nanokompositmaterials fixiert.

## Claims

1. A polymerizable nanocomposite material in solid or gel form, containing
a) from 4.9 to 95.9% by weight of a polyacrylate, polymethacrylate, polyepoxide, polyvinyl alcohol, polyvinyl acetate or polyvinyl butyral which is soluble in an organic solvent;
b) from 4 to 95% by weight of a partially or fully condensed silane from the following group: acrylosilanes, epoxysilanes, acryloalkoxysilanes, acrylo-epoxysilanes, epoxyalkoxysilanes, alkoxysilanes and alkylalkoxysilanes, the silane having an inorganic condensation ratio of from 33 to 100% and an organic conversion ratio of from 0 to 95%;
c) from 0 to 60% by weight of an acrylate;
d) from 0.1 to 50% by weight of surface-modified nanoscale particles from the following group: oxides, sulfides, selenides, tellurides, halides, carbides, arsenides, antimonides, nitrides, phospides, carbonates, carboxylates, phosphates, sulfates, silicates, titanates, zirconates, aluminates, stannates, plumbates and mixed oxides thereof;
e) from 0 to 50% by weight of a softener;
f) from 0 to 5% by weight of a thermal or photochemical crosslinking initiator, sensitizer, wetting agent, adhesion promoter, rheological additive, antioxidant, stabilizer, colorant, photochromic and thermochromic substance, or a combination thereof, in each case expressed in terms of the total weight (dry weight) of the nanocomposite material.

2. The nanocomposite material as claimed in claim 1, **characterized in that** the silane b) is methacryloxypropyltrimethoxysilane, acryloxypropyltrimethoxysilane, dimethyldimethoxysilane, dimethyldiethoxysilane, 3-glycidyloxypropyltrimethoxysilane, vinyltriethoxysilane, methyltriethoxysilane or a combination thereof.

3. The nanocomposite material as claimed in claim 1 or 2, **characterized in that** the acrylate c) is methyl methacrylate or a diol diacrylate or diol dimethacrylate.

4. The nanocomposite material as claimed in at least one of claims 1 to 3, **characterized in that** the nanoscale particles d) are surface-modified with compounds containing (meth)acryl, allyl, vinyl, epoxy, hydroxyl, carboxyl or amino groups or a combination thereof.

5. The nanocomposite material as claimed in at least one of claims 1 to 4, **characterized in that** the nanoscale particles are surface-modified Si0₂, TiO₂, ZrO₂ or Ta₂O₅ particles.

6. The nanocomposite material as claimed in at least one of claims 1 to 3, containing from 0.1 to 30% by weight of a softener.

7. A process for the production of a nanocomposite material as claimed in one or more of claims 1 to 6, **characterized in that** the silane b) is partially or fully condensed by adding a hydrolyzer and optionally polymerized by UV irradiation, and mixed with one or more of the components a), c) to f), or the silane b) is first mixed with one or more of the components a), c) to f) and then condensed and optionally polymerized, and optionally organic solvent is subsequently removed.

8. Use of a nanocomposite material as claimed in one or more of claims 1 to 6 for the production of a planar material with a refractive index gradient.

9. A film with a refractive index gradient, consisting essentially of one or two transparent plastic films which are coated with a nanocomposite material as claimed in one or more of claims 1 to 6, in which a refractive index gradient has been produced by applying an electrical potential difference, electron irradiation, holography, lithography or by local illumination.

10. A process for the production of a film with a refractive index gradient as claimed in claim 9, **characterized in that** a nanocomposite material as claimed in one or more of claims 1 to 6 is applied to a transparent plastic film, organic solvent is allowed to evaporate, optionally the nanocomposite layer is laminated with a transparent cover film, a refractive index gradient is produced in the nanocomposite layer by applying an electrical potential difference, electron irradiation, holography, lithography or by local illumination, and the refractive index gradient is subsequently fixed by complete thermal and/or light-induced crosslinking of the nanocomposite material.

## Revendications

1. Matériau nanocomposite polymérisable, solide ou gélifié, contenant
a) 4,9 à 95,9 % en poids d'un polyacrylate, polyméthacrylate, polyépoxyde, polyvinylalcool, polyvinylacétate ou polyvinylbutyral soluble dans un solvant organique ;
b) 4 à 95 % en poids d'un silane partiellement ou complètement condensé du groupe des acrylsilanes, époxysilanes, acrylalcoxysilanes, acrylépoxysilanes, époxyalcoxysilanes, alcoxysilanes et alkylalcoxysilanes, dans lequel le silane présente un degré de condensation inorganique de 33 à 100 % et un degré de conversion organiques de 0 à 95 % ;
c) 0 à 60 % en poids d'un acrylate ;
d) 0,1 à 50 % en poids de nanoparticules modifiées en surface du groupe des oxydes, sulfures, séléniures, tellurures, halogénures, carbures, arséniures, antimoniures, nitrures, phosphures, carbonates, carboxylates, phosphates, sulfates, silicates, titanates, zirconates, aluminates, stannates, plombates et leurs oxydes mixtes;
e) 0 à 50 % en poids d'un plastifiant ;
f) 0 à 5 % en poids d'un initiateur de réticulation thermique ou photochimique, sensibilisateur, adjuvant de réticulation, adjuvant d'adhérence, agent nivelant, anti-oxydant, stabilisant, colorant, substance photochrome et thermochrome thermique ou photochimique, ou d'une combinaison d'entre eux, respectivement par rapport au poids total (poids sec) du matériau nanocomposite.

2. Matériau nanocomposite selon la revendication 1, **caractérisé en ce que** le silane b) est le méthacryloxypropyltriméthoxysilane, acryloxypropyltriméthoxysilane, diméthyldiméthoxysilane, diméthyldiéthoxysilane, 3-glycidyloxypropyltriméthoxysilane, vinyltriéthoxysilane, méthyltriéthoxysilane ou une combinaison d'entre eux.

3. Matériau nanocomposite selon l'une des revendications 1 ou 2, **caractérisé en ce que** l'acrylate c) est le méthacrylate de méthyle ou un dioldiacrylate ou dioldiméthacrylate.

4. Matériau nanocomposite selon au moins l'une des revendications 1 à 3, **caractérisé en ce que** les nanoparticules d) sont modifiées en surface avec des composés contenant des groupes (méth)acryliques, allyliques, vinyliques, époxy, hydroxy, carboxy ou amino ou une combinaison d'entre eux.

5. Matériau nanocomposite selon au moins l'une des revendications 1 à 4, **caractérisé en ce que** les nanoparticules sont des particules de SiO₂, TiO₂, ZrO₂ ou Ta₂O₅ modifiées en surface.

6. Matériau nanocomposite selon au moins l'une des revendications 1 à 5, contenant 0,1 à 30 % en poids d'un plastifiant.

7. Procédé de préparation d'un matériau nanocomposite selon l'une ou plusieurs des revendications 1 à 6, **caractérisé en ce que** l'on condense partiellement ou totalement le silane b) par ajout d'un agent hydrolysant et qu'on le polymérise éventuellement par irradiation UV, et on le mélange avec un ou plusieurs des composants a), c) à f), ou on mélange le silane b) d'abord avec un ou plusieurs des composants a), c) à f) et on le condense ensuite et on le polymérise éventuellement, et ensuite on élimine éventuellement du solvant organique.

8. Utilisation d'un matériau nanocomposite selon l'une ou plusieurs des revendications 1 à 6, pour la préparation d'un matériau planaire avec des gradients d'indice de réfraction.

9. Feuille à gradient d'indice de réfraction, constituée essentiellement d'une ou deux feuilles de matière plastique transparente, qui sont revêtues avec un matériau nanocomposite selon l'une ou plusieurs des revendications 1 à 6, dans laquelle on produit un gradient d'indice de réfraction par application d'une différence de potentiel électrique, irradiation par des électrons, holographie, lithographie ou par insolation locale.

10. Procédé de préparation d'une feuille à gradient d'indice de réfraction selon la revendication 9, **caractérisé en ce que** l'on dépose un matériau nanocomposite selon l'une ou plusieurs des revendications 1 à 6 sur une feuille de matière plastique transparente, on fait évaporer du solvant organique, on lamine éventuellement une feuille de protection transparente sur la couche de nanocomposite, on produit dans la couche de nanocomposite un gradient d'indice de réfraction par application d'une différence de potentiel électrique, irradiation par des électrons, holographie, lithographie ou par insolation locale, et ensuite on fixe le gradient d'indice de réfraction par réticulation totale thermique et/ou induite par la lumière du matériau nanocomposite.
